**Europäisches Patentamt**

**European Patent Office**

**Office européen des brevets**

(11) Veröffentlichungsnummer: **0 306 622**
**A2**

## (12) EUROPÄISCHE PATENTANMELDUNG

(21) Anmeldenummer: **88108556.7**

(22) Anmeldetag: **28.05.88**

(51) Int. Cl.4: **H04B 7/155**

(30) Priorität: **08.09.87 DE 3730052**

(43) Veröffentlichungstag der Anmeldung:
**15.03.89 Patentblatt 89/11**

(84) Benannte Vertragsstaaten:
**BE DE NL**

(71) Anmelder: **ROBERT BOSCH GMBH**
**Postfach 50**
**D-7000 Stuttgart 1(DE)**

(72) Erfinder: **Otto, Friedrich**
**Imkerweg 3**
**D-2117 Tostedt(DE)**

(74) Vertreter: **Schmidt, Hans-Ekhardt, Dipl.-Ing.**
**Robert Bosch GmbH Geschäftsbereich**
**Mobile Kommunikation Patent- und**
**Lizenzabteilung Forckenbeckstrasse 9-13**
**D-1000 Berlin 33(DE)**

(54) **Funknetz.**

(57)
  2.1 Der Erfindung liegt die Aufgabe zugrunde, die Übertragung von Informationen von einem ersten Simplex-Funkgerät (10) über eine Relaisstation (20) zu einem zweiten Simplex-Funkgerät (40) derart umzugestalten, daß nur eine Sendefrequenz benötigt wird.

  2.2 Diese Aufgabe wird dadurch gelöst, daß die von dem ersten Funkgerät (10) ausgesendete Information in einer Speichervorrichtung (31) der Relaisstation (20) zwischengespeichert wird und daß anschließend die gespeicherte Information von der Relaisstation mit der gleichen Sendefrequenz ausgesendet wird. Gleichzeitig mit der Information sendet das erste Funkgerät (10) ein Pilotsignal aus, das ein Pilotsignalauswerter (23) der Relaisstation (20) auswertet und zur Steuerung der Speichervorrichtung (31) benutzt.

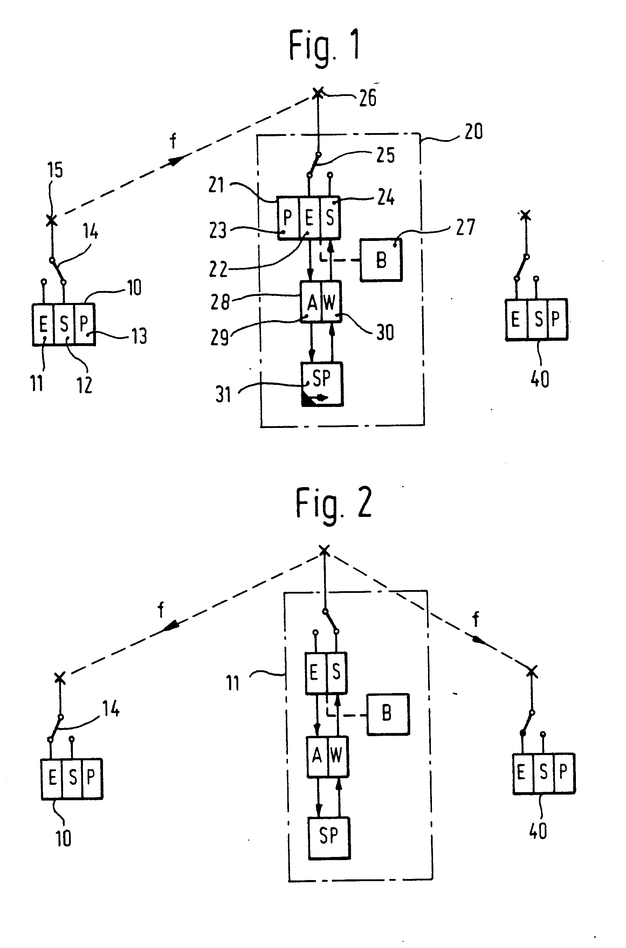

  3. In der Zeichnung ist ein erfindungsgemäßes Funknetz mit einem ersten Funkgerät (10), einer Relaisstation (20) und einem zweiten Funkgerät (40) gezeigt. (Fig. 1)

Fig. 1

EP 0 306 622 A2

## Funknetz

Die Erfindung betrifft ein Funknetz nach dem Oberbegriff des Anspruchs 1.

### Stand der Technik

Es ist ein Funknetz bekannt (Resemeier, Handbuch über den UKW-Sprechfunk bei den Sicherheitsdiensten, Carl Heymanns Verlag KG, 1971, Seiten 38 und 39), das für eine Übertragung von Informationen, das sind zum Beispiel Sprach- oder Dateninformationen, von einem ersten Simplex-Funkgerät über eine Relaisstation zu einem zweiten Simplex-Funkgerät zwei verschiedene Frequenzen benötigt.

### Aufgabe

Der Erfindung liegt die Aufgabe zugrunde, ein Funknetz der gattungsgemäßen Art derart umzugestalten, daß nur eine Frequenz für die Übertragung von Informationen ausreicht.

### Lösung und erzielbare Vorteile

Diese Aufgabe wird bei einem gattungsgemäßen Funknetz durch die kennzeichnenden Merkmale des Anspruchs 1 gelöst.

Die mit der Erfindung erzielbaren Vorteile bestehen insbesondere darin, daß nur noch eine Frequenz benötigt wird, um eine Information von einem Simplex-Funkgerät über eine Relaisstation zu einem anderen Simplex-Funkgerät zu übertragen.

### Beschreibung eines Ausführungsbeispiels

Ein Ausführungsbeispiel der Erfindung ist in der Zeichnung an Hand mehrerer Figuren dargestellt und wird im folgenden näher beschrieben. Es zeigen

Fig. 1 ein Blockschaltbild des Funknetzes, wobei ein Funkgerät sendet und die Relaisstation empfängt,

Fig. 2 ein Blockschaltbild des Funknetzes, wobei die Relaisstation sendet und zwei Funkgeräte empfangen.

Nach Fig. 1 weist ein erstes Simplex-Funksende- und -empfangsgerät 10 - im folgenden als erstes Funkgerät bezeichnet - ein Empfangsteil 11, ein Sendeteil 12, einem mit dem Sendeteil 12 verbundenen Pilotsignalgeber 13, einen Antennenumschalter 14 und eine mit diesem verbundene Antenne 15 auf. Eine zu dem Funknetz gehörende Relaisstation 20 unfaßt ein Simplex-Funksende- und -empfangsgerät 21 - im folgenden Funkgerät 21 der Relaisstation genannt -mit einem Empfangsteil 22, einem mit diesem verbundenen Pilotsignalauswerter 23, einem Sendeteil 24, einem Antennenumschalter 25 und einer mit diesem verbundenen Antenne 26.

Zu dem Funkgerät der Relaisstation gehören noch ein Bedienteil 27 und eine Steuervorrichtung 28 mit einem Aufnahmesteuerungsteil 29 und einem Wiedergabesteuerungsteil 30 sowie eine mit der Steuervorrichtung 28 verbundene Speichervorrichtung 31. Die Speichervorrichtung ist beispielsweise ein Tonbandgerät mit Endloskassette oder ein elektronischer Speicher.

Ein zweites Simplex-Funkgerät 40 hat denselben Aufbau wie das erste Funkgerät 10.

Die Wirkungsweise des vorstehend beschriebenen Funknetzes ist folgende.

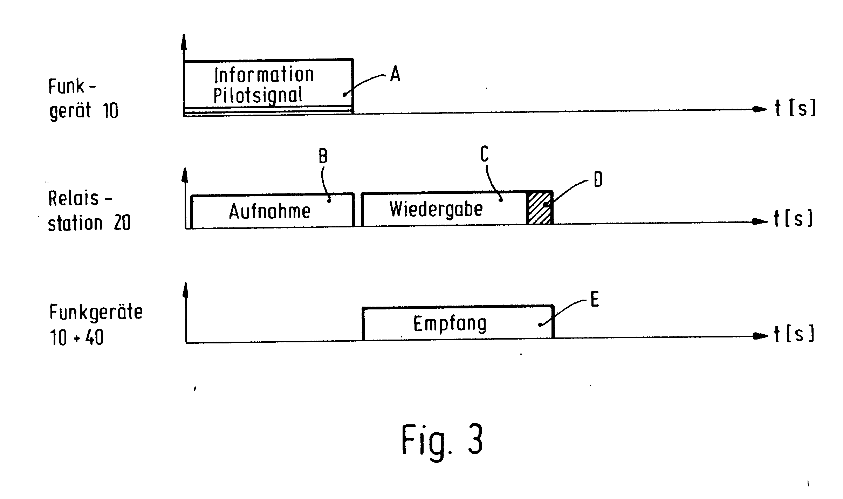

Will der Teilnehmer des ersten Funkgerätes 10 eine Information zu dem zweiten Funkgerät 40 übertragen, so sendet er diese Information zusammen mit einem von seinem Pilotsignalgeber 13 gelieferten Pilotsignal über den in der in Fig. 1 gezeigten Schaltstellung befindlichen Antennenumschalter 14 und die Antenne 15 auf einer Frequenz f zu der Relaisstation 20. Diese empfängt mit ihrer Antenne 26 das die Information und das Pilotsignal enthaltende Sendesignal A (Fig. 3) des ersten Simplex-Funkgerätes 10. Das Signal wird über den Antennenumschalter 25, der in der Ruhestellung die Antenne 26 mit dem Empfangsteil 22 verbindet, an das Empfangsteil weitergeleitet. Der zu dem Empfangsteil gehörende Pilotsignalauswerter 23 stellt den Empfang des Pilotsignals fest und veranlaßt das Aufnahmesteuerteil 29, die Speichereinrichtung 31 auf "Aufnahme" zu schalten. Damit wird die durch Demodulation im Empfangsteil 22 erhaltene Information in der Speichervorrichtung gespeichert; vgl. B in Fig. 3. Stellt der Pilotsignalauswerter 23 fest, daß kein Pilotsignal bzw. keine Information mehr gesendet wird, so schaltet er das Funkgerät 21 von "Empfangen" auf "Senden" und die Speichervorrichtung 31 mittels der Steuervorrichtung 28 von "Aufnahme" auf "Wiedergabe"; vgl. C in Fig. 3. Am Ende der Wiedergabe der gespeicherten Information wird vorzugsweise ein Schlußsignal D (Fig. 3) gegeben, dessen Bedeutung darin besteht, daß alle Teilnehmer wissen, daß die Sendung zu Ende und die Frequenz wieder frei ist und zur Verfügung steht.

Das Senden der gespeicherten Information und des Schlußsignals erfolgt auf derselben Frequenz f.

Der Antennenumschalter 14 des ersten Funkgerätes 10 kehrt nach dem Senden der Information automatisch in die Ruhestellung (Fig. 2) zurück. Der Antennenumschalter des zweiten Funkgerätes 40 befindet sich ebenfalls in der Ruhestellung. Beide Funkgeräte empfangen somit das von der Relaisstation 20 gesendete Signal, vgl. E in Fig. 3. Mit dem ersten Funkgerät 10 kann kontrolliert werden, ob der von der Relaisstation 20 ausgesendete Speicherinhalt der vorher von dem Funkgerät 10 ausgesendeten Information entspricht. Am Ende der Aussendung des Speicherinhalts, das heißt bein Auftreten des Schlußsignals, schaltet das Funkgerät 21 der Relaisstation 20 wieder auf "Empfang" zurück. Mit dem späteren Aufnehmen einer neuen Information wird dann der bisherige Speicherinhalt in der Speichervorrichtung 31 gelöscht. Die Speichervorrichtung 31 kann wie, bereits erwähnt, ein Kassettenrecorder sein oder ein elektronischer Speicher mit einer Speicherkapazität für eine Information vorgegebener Länge.

Das Pilotsignal zum Steuern der Speichervorrichtung 31 ist vorzugsweise ein Dauerton. Eine Alternative dazu ist ein Mehrtonfolge-Selektivruf oder ein Datentelegramm. Der Dauerton wird vorzugsweise als Subaudioton unterhalb des Nutzfrequenzbandes übertragen.

Ist die Information eine Sprachinformation, so empfiehlt es sich, als elektronischen Speicher einen elektronischen Sprachspeicher zu verwenden, der eine variable Speicherzeit von zum 5 bis 20 s aufweist. Aus diese Weise können Sprachinformationen verschiedener Länge, das heißt also auch Gespräche, übertragen werden.

## Ansprüche

1. Funknetz mit Simplex-Funksende- und -empfangsgeräten, die über eine mit einem Simplex-Funksende- und -empfangsgerät ausgerüstete Relaisstation Informationen austauschen, dadurch gekennzeichnet, daß die Relaisstation (20) eine von einem ersten Funksende- und -empfangsgerät (10) auf einer bestimmten Frequenz ausgesendete Information in einer Speichervorrichtung (31) speichert und am Ende der empfangenen Information die gespeicherte Information auf derselben Frequenz aussendet.

2. Funknetz nach Anspruch 1, dadurch gekennzeichnet, daß das Sendeteil (12) des Simplex-Funksende- und -empfangsgerätes (10) einen Pilotsignalgeber (13) und das Empfangsteil (22) der Relaisstation (20) einen Pilotsignalauswerter (23) aufweist.

3. Funknetz nach Anspruch 1 oder 2, dadurch gekennzeichnet, daß das Pilotsignal ein Tonsignal ist.

4. Funknetz nach Anspruch 1 oder 2, dadurch gekennzeichnet, daß das Pilotsignal ein Mehrtonfolge-Signal ist.

5. Funknetz nach Anspruch 1 oder 2, dadurch gekennzeichnet, daß das Pilotsignal ein Datentelegramm ist.

6. Funknetz nach Anspruch 1 oder einem der folgenden, dadurch gekennzeichnet, daß das Pilotsignal ein während der gesamten Dauer der Informationsübertragung mitausgesendetes Signal ist.

7. Funknetz nach einem der Ansprüche 1 bis 6, dadurch gekennzeichnet, daß das Pilotsignal ein Subaudiosignal ist.

8. Funknetz nach einem der Ansprüche 1 bis 7, dadurch gekennzeichnet, daß die Speichervorrichtung (31) ein Tonbandgerät mit Endloskassette ist.

9. Funknetz nach einem der Ansprüche 1 bis 7, dadurch gekennzeichnet, daß die Speichervorrichtung (31) ein elektronischer Speicher ist.

10. Funknetz nach Anspruch 9, dadurch gekennzeichnet, daß der elektronische Speicher eine Speicherkapazität für eine festgelegte Informationsdauer hat.

11. Funknetz nach Anspruch 9, dadurch gekennzeichnet, daß der elektronische Speicher eine variable Speicherkapazität aufweist.

# Fig. 1

# Fig. 2

Funkgerät 10

Relaisstation 20

Funkgeräte
10 + 40

Fig. 3

EP 0 306 622 A2